(19) Europäisches Patentamt
European Patent Office
Office européen des brevets

(11) **EP 3 756 963 B1**

(12) **EUROPEAN PATENT SPECIFICATION**

(45) Date of publication and mention
of the grant of the patent:
**05.11.2025 Bulletin 2025/45**

(21) Application number: **20181505.7**

(22) Date of filing: **22.06.2020**

(51) International Patent Classification (IPC):
**B60W 10/06** (2006.01)  **B60W 10/08** (2006.01)
**B60W 20/11** (2016.01)  **B60W 20/12** (2016.01)
**B60W 10/02** (2006.01)  **B60W 10/11** (2012.01)
**B60W 50/00** (2006.01)

(52) Cooperative Patent Classification (CPC):
**B60W 20/11; B60W 10/02; B60W 10/06;
B60W 10/08; B60W 10/11; B60W 20/12;**
B60W 2050/001; B60W 2050/0011;
B60W 2050/0013; B60W 2050/0031;
B60W 2050/0039; B60W 2050/0041;
B60W 2510/0216; B60W 2510/0666;
B60W 2510/085;                              (Cont.)

(54) **A METHOD AND A SYSTEM FOR CONTROLLING A VEHICLE ON A MISSION**

EIN VERFAHREN UND EIN SYSTEM ZUR STEUERUNG EINES FAHRZEUGS BEI EINEM EINSATZ

UNE MÉTHODE ET UN SYSTÈME DE CONTRÔLE D'UN VÉHICULE EN MISSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.06.2019 IT 201900010431**

(43) Date of publication of application:
**30.12.2020 Bulletin 2020/53**

(73) Proprietor: **FPT Motorenforschung AG
9320 Arbon (CH)**

(72) Inventors:
• **RITZMANN, Johannes**
8180 BÜLACH (CH)
• **CHINELLATO, Oscar**
9327 TÜBACH (CH)
• **CHRISTON, Andreas**
8057 ZÜRICH (CH)
• **SALAZAR, Mauro**
6932 BREGANZONA (CH)
• **ONDER, Christopher**
8484 WEISSLINGEN (CH)

(74) Representative: **Studio Torta S.p.A. et al
Via Viotti, 9
10121 Torino (IT)**

(56) References cited:
WO-A1-2018/158524   FR-A1- 3 055 996
FR-A1- 3 068 322   US-A1- 2018 050 682

• NAMWOOK KIM ET AL: "Optimal Control of Hybrid Electric Vehicles Based on Pontryagin's Minimum Principle", IEEE TRANSACTIONS ON CONTROL SYSTEMS TECHNOLOGY, IEEE SERVICE CENTER, NEW YORK, NY, US, vol. 19, no. 5, 1 September 2011 (2011-09-01), pages 1279 - 1287, XP011387027, ISSN: 1063-6536, DOI: 10.1109/TCST.2010.2061232
• SANS MARIANO ET AL: "Connected optimal predictive control for hybrid vehicles", 2016 INTERNATIONAL CONFERENCE ON ELECTRICAL SYSTEMS FOR AIRCRAFT, RAILWAY, SHIP PROPULSION AND ROAD VEHICLES & INTERNATIONAL TRANSPORTATION ELECTRIFICATION CONFERENCE (ESARS-ITEC), IEEE, 2 November 2016 (2016-11-02), pages 1 - 9, XP033059412, DOI: 10.1109/ESARS-ITEC.2016.7841358
• PHAM T H ET AL: "Analytical Solution to Energy Management Guaranteeing Battery Life for Hybrid Trucks", IEEE TRANSACTIONS ON VEHICULAR TECHNOLOGY, IEEE, USA, vol. 65, no. 10, 1 October 2016 (2016-10-01), pages 7956 - 7971, XP011625703, ISSN: 0018-9545, [retrieved on 20161013], DOI: 10.1109/TVT.2015.2480745

(52) Cooperative Patent Classification (CPC): (Cont.)
B60W 2510/1005; B60W 2510/244; B60W 2520/10;
B60W 2552/15; B60W 2552/20; B60W 2556/50;
B60W 2710/021; B60W 2710/0677;
B60W 2710/086; B60W 2710/1005; Y02T 10/40;
Y02T 10/62; Y02T 10/84

**Description**

CROSS-REFERENCE TO RELATED APPLICATIONS

This patent application claims priority from Italian patent application no. 102019000010431 filed on 28/06/2019.

TECHNICAL FIELD

The present invention concerns a method and a system for controlling a vehicle on a mission, in particular by means of optimal control inputs determined such as to minimize fuel consumption and/or pollutant emissions.

BACKGROUND OF THE INVENTION

Some vehicles are known to enjoy high flexibility properties since capable of satisfying power supply needs through the serial and/or parallel exploitation of at least one first power source and at least one second power source.

Commonly, the first power source delivers power from a first energy storage and cannot recuperate energy, whereas the second power source delivers power from a second energy storage and can provide energy to the second power source.

Usually, the first energy storage is a fuel tank and the first power source uses fuel from the fuel tank to generate energy. Typically, the first power source is an internal combustion engine, but also other sources may be considered, such as fuel cells operating on gaseous fuels.

In other possible cases, the first power source does not rely on fuel, such as when the first energy storage is represented by an overhead line and the first power source is a power converter.

On the other hand, the second power source is usually an electric motor/generator and the second energy storage is a battery.

The above vehicles are also known to be provided with control systems, which are adapted to manage optimally the split of the required power between the available power sources.

In particular, when the first and the second energy storage are a fuel tank and a battery, the control systems operate to minimize fuel consumption while fulfilling constraints on the level of charge of the battery.

Some of the known control systems rely on a-priori information about missions that the vehicles have to carry out.

The term mission is here used to identify the completion of travel of a vehicle along a predetermined path or track.

Such a priori information typically includes the required speed of the vehicles and the features of the tracks to be followed, such as road gradients, surface conditions and the like.

In order to determine optimal inputs for controlling the power flows within the vehicles, the known control systems carry out optimization methods based on the construction and solution of an optimal control problem.

The latter optimal control problem is posed as a constrained minimization of a specific cost function. In particular, the cost to be minimized typically includes terms representing the overall consumed fuel.

The above terms are accurately modeled through nonlinear and non-convex functions, which often depend on a high number of dynamic state variables and optimization variables.

However, in view of that, known optimization methods are hard to be computer implemented, especially in a real-time fashion.

Indeed, the complexity of the cost function and of the constraints to be met lead to solutions of the related optimal control problem, which require heavily time-consuming computations.

Therefore, the need is felt to provide an optimization method for controlling a vehicle on a mission, whose actual implementation on a related system requires a reduced computational effort with respect to the above mentioned optimization methods.

For example, WO2018158524A1 discloses a method to calculate an optimal triplet of values respectively relating to the power that the electric motor must provide, the power that the engine must provide, and the ratio to be engaged in the gearbox.

Other less relevant methods are disclosed, for example, in FR3068322A1 and FR3055996A1.

An aim of the present invention is to satisfy the above-mentioned need.

SUMMARY OF THE INVENTION

The aforementioned aim is achieved by a method and a system for controlling a vehicle, as claimed in the appended set of claims.

BRIEF DESCRIPTION OF DRAWINGS

For a better understanding of the present invention, a preferred embodiment is described in the following, by way of a non-limiting example, with reference to the attached drawings wherein:

- Figure 1 illustrates schematically a vehicle comprising a system for controlling the same vehicle, according to an embodiment of the invention; and
- Figure 2 is a block diagram showing the scheme of a method for controlling the vehicle of Figure 1, according to an embodiment of the invention.

DETAILED DESCRIPTION OF THE INVENTION

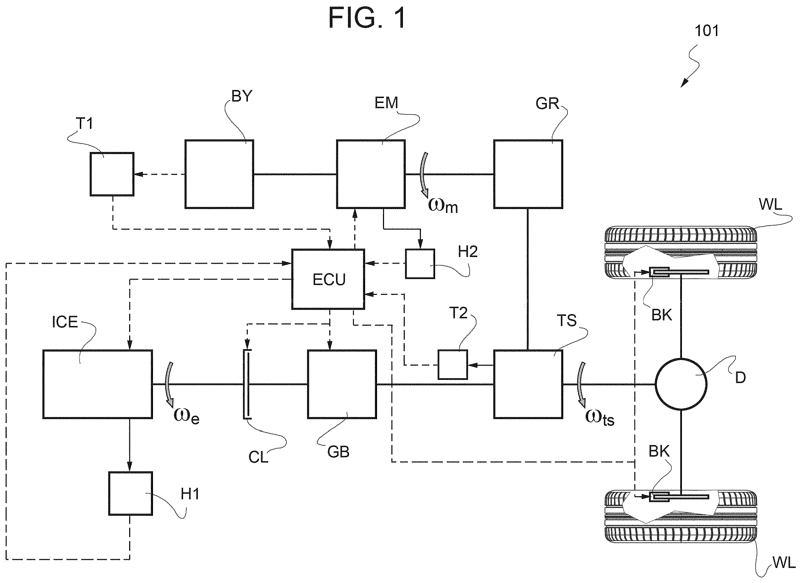

In figure 1, reference number 101 indicates a vehicle comprising a first power source or generator and a second power source or generator.

Vehicle 101 further comprises a first and a second energy storage respectively coupled to the first and the second power source and from which the latter draw energy for driving vehicle 101.

The first power source only dissipates energy from the first energy storage, whereas the second power source can provide energy to the second energy storage.

In particular, vehicle 101 is a hybrid electric vehicle or HEV where, more in particular, the second energy storage and the second power source respectively comprise a battery BY and an electric motor EM.

Moreover, conveniently, the first energy storage and the first power source respectively comprise a fuel tank (not shown) and an internal combustion engine ICE.

Electric motor EM and battery BY are coupled to each other, for instance by means of a DC/DC converter, such that electric motor EM is supplied by power taken from batter BY.

Vehicle 101 further comprises an axle provided with a pair of traction wheels WL and an automotive differential D, to which outputs traction wheels WL are coupled. The axle further comprises a pair of friction brakes BK respectively coupled to traction wheels WL to apply braking torques thereon.

Moreover, vehicle 101 comprises a torque split TS, which is coupled to both engine ICE and motor EM to receive respectively engine and motor power therefrom and supply accordingly the sum of the received powers in input to differential D.

In such a manner, wheels WL may be driven by both engine ICE and motor EM in a parallel fashion. In other words, vehicle 101 is a parallel-type HEV.

Although the following description will refer only to a parallel-type HEV without any loss of generality, the concepts disclosed hereinafter are readily transposable without any effort to serial-type HEVs or any other types of HEV.

Vehicle 101 further comprises a clutch CL and a gearbox GB connecting engine ICE to torque split TS in a selective manner. In particular, gearbox GB has a not-shown input shaft selectively drivable by engine ICE via clutch CL and a not-shown output shaft that is directly coupled to torque split TS.

With greater detail, gearbox GB introduces a plurality of gear ratios between engine ICE and torque split TS. In particular, six increasing gear ratios are considered.

In addition, vehicle 101 comprises a transmission, e.g. a gear reducer GR, that couples motor EM to torque split TS. Specifically, gear reducer GR introduces a fixed gear ratio between motor EM and torque split TS.

Moreover, vehicle 101 comprises a control unit ECU, in particular an on-board computer, which is coupled to battery BY, motor EM, gearbox GB, clutch CL, internal combustion engine ICE, torque split TS, and specifically also to friction brakes BK.

Control unit ECU is configured to receive and store a plurality of parameters regarding a given mission to be pursued by vehicle 101.

Based on such parameters, control unit ECU is configured to determine the power to be supplied by engine ICE and motor EM, as well as to choose gears for gearbox GB, corresponding to the respective gear ratios, in order to guarantee the mission completion, a minimized fuel consumption, and the satisfaction of one or more constraints.

More precisely, control unit ECU stores constraints that are relative to the charge level of battery BY at the end of the mission and, possibly, to the respect of the physical limits of vehicle 101.

Moreover, control unit ECU receives and stores the above parameters before the starting of the mission and as a function of a variable z, which is associated to the actual position of vehicle 101 after the start of the mission.

The variable z may directly represent the actual position of vehicle 101 along the track.

Otherwise, the variable z may be for instance defined by the elapsed time from the starting of the mission. The elapsed time is, indeed, associated to the actual position of vehicle 101; the association holds in view of the length/shape of the track and the land speed of vehicle 101, since the latter are assumed known a-priori in view of the mission.

Hence, the variable z can take values between a given interval $[z_0 \ z_f]$, where $z_0$ can be arbitrarily set to a null value

**EP 3 756 963 B1**

and $z_f$ depends on the assumed features of the track to be followed, given the mission.

Specifically, control unit ECU receives and stores two parameters Γ, *v* as a function of the variable *z*.

Respectively, parameters Γ, *v* are indicative of the assumed grade of the track to be followed by vehicle 101 and of the assumed land speed that vehicle 101 should take along the same track.

In particular, parameters Γ, *v* are respectively defined by the above grade of the track and land speed.

Parameters Γ, *v* are used by control unit ECU to compute other parameters as a function of the variable *z*, which are useful for control unit ECU to determine the appropriate power supply for wheels WL, as it will become clearer in the following of the disclosure.

With greater detail, the following holds:

$$\omega_{\mathrm{ts}} = v\,\frac{\gamma_{\mathrm{fd}}}{r_{\mathrm{w}}} \qquad (2)$$

$$T_{\mathrm{trac,ts}} = F_{\mathrm{trac}}\,\frac{r_{\mathrm{w}}}{\gamma_{\mathrm{fd}}} \qquad (3)$$

where $\gamma_{fd}$, $r_w$, $\omega_{ts}$, $F_{trac}$, $T_{trac,ts}$ represent respectively the transmission ratio of differential D, the radius of wheel WL, the angular rate at the output of torque split TS, the tangential traction force exerted by wheels WL onto the track, and the total traction torque outputted by torque split TS and inputted to differential D.

$\gamma_{fd}$, $r_w$ are constant values, which are stored by control unit ECU.

On the other hand $F_{trac}$ is computed by control unit ECU as a function of the parameters Γ, *v*, thanks to a mathematical model stored within control unit ECU.

For instance, control unit ECU stores the following mathematical model of $F_{trac}$:

$$F_{\mathrm{trac}} = F_{\mathrm{d}}(\Gamma, v) + F_{\mathrm{m}}(a) + F_{\mathrm{br}} \qquad (1)$$

Where $F_d$, $F_m$, $F_{br}$ represents respectively the drag forces (e.g. aerodynamic drag, rolling resistance and uphill driving force) acting on vehicle 101, the inertia of vehicle 101, and the braking force of brakes BK. Parameter *a* is the acceleration of vehicle 101 and is computed by control unit ECU as the derivative of parameter *v*.

Based on the above parameters, control unit ECU is configured to control the amount of power to be directly supplied by motor EM and to control the selection of the gear for gearbox GB.

In addition, control unit ECU is configured to operate engagement and disengagement of clutch CL, such that selection of the gear is unnecessary when clutch CL is opened.

Control unit ECU performs managing of clutch CL and of gearbox GB by:

- updating at least one first variable, which is discrete and represents the engagement or disengagement status of clutch CL, as well as the selected gear; and
- generating command signals associated to the at least one first variable for accordingly operate clutch CL and gearbox GB.

Specifically, control unit ECU updates a single discrete variable i to control clutch CL and gearbox GB.

In particular, discrete variable i takes integer values, each being associated to a corresponding gear, e.g. 1, 2, 3, 4, 5, 6, or associated to the disengaged status of clutch CL, e.g. 0.

Clearly, when the variable i takes values that are associated to gears, the engagement status of clutch CL is necessarily implied.

In view of the above, the first variable is indicative of an operation mode of vehicle 101. Indeed, for example, the variable i equal to zero indicates that vehicle 101 operates in a fully electric mode. Moreover, the possibility of choosing the gears indirectly implies the adaptability of vehicle 101 to operate in accordance with different track conditions.

Control unit ECU manages also the supply of power to torque split TS by:

- updating at least one second variable, which is continuous and indicative of the power amount supplied by at least one of motor EM and engine ICE; and
- generating command signals associated to the at least one second variable for accordingly operate at least one of motor EM and engine ICE.

Specifically, control unit ECU updates a single continuous variable u to control the power supply from motor EM and from engine ICE.

In particular, the variable u is defined by a torque split ratio here defined as:

$$u = \frac{T_{\mathrm{m,ts}}}{T_{\mathrm{trac,ts}}} \,. \qquad (4)$$

where $T_{m,ts}$ represents the torque provided by motor EM at torque split TS and $T_{trac,ts}$ represents the total traction torque outputted by torque split TS and inputted to differential D.

More precisely, the following holds:

$$T_{\mathrm{e,ts}} = (1 - u)\, T_{\mathrm{trac,ts}} \,. \qquad (6)$$

where $T_{e,ts}$ represents the torque provided by engine ICE at torque split TS.

The variable u is indicative of the instantaneous power $P_m$ provided by motor EM since the same $P_m$ is proportional to the product $T_{m,ts} \cdot \omega_{ts}$ and since $T_{trac,ts}$, $\omega_{ts}$ are respectively derivable through equations 2, 3, by knowing parameters $\Gamma$, $v$.

Indeed, control unit ECU can evaluate $T_{m,ts}$ from equation 4 and then $P_m$ by multiplying the product $T_{m,ts} \cdot \omega_{ts}$ by a known proportionality constant, which is stored in control unit ECU and is substantially defined by the product of the respective efficiencies of gear reducer GR and torque split TS.

Control unit ECU updates the first and the second variable by solving an optimal control problem. The optimal control problem comprises the determination of values of the first and the second variable, as a function of variable z, which lead to the minimization of a chosen cost function.

The variable z is the independent variable of the optimal control problem solved by control unit ECU.

The cost function is determined for at least a portion of the mission and is representative of a first quantity indicative of an energy consumed by the first power source after the portion itself is completed.

More precisely, the first quantity is indicative of the fuel consumed by vehicle 101.

The cost function is a convex function in at least the first variable and a third variable, which is related to the second variable. All constraints are expressible in mathematical terms as equations or inequations comprising explicit functions of at least one of the first and the third variable. Each of the constraints defines a convex set of admissible values for at least one of the first variable, the third variable, and the state variable.

In such a manner, the optimal control problem solved by control unit ECU results in a convex optimization problem.

With greater detail, the constraints comprise at least one first inequality constraint. Such a first inequality constraint is expressible by an inequation, which has a first and a second member.

The first member is the total derivative of at least one state variable with respect to variable z, whereas the second member comprises terms that, in particular, are explicitly independent of the same state variable.

The state variable is indicative of the energy amount available to the second power source, such that the latter can generate power for driving vehicle 101. More precisely, the energy amount is stored within the battery BY and defines the state of charge of the battery BY. Specifically, the state variable is indicative of the state of charge of the battery BY.

In particular, the aforementioned first quantity is explicitly independent of the state variable

The constraints further comprise at least one first equality constraint reflecting a mathematical model of vehicle 101, for instance comprising the mathematical model of $F_{trac}$ in equation 1. Such a first equality constraint comprises a third and a fourth member respectively comprising, in turn, convex functions in at least one of the first and the third variable.

Therefore, given the features of the cost function and the constraints, the optimal control problem is solvable for at least the second variable in view of the known Pontyragin's minimum principle. Control unit ECU solves the optimal control problem in view of such a principle.

In particular, the optimal control problem may be stated as follows, with z specifically representing the elapsed time:

$$\operatorname*{argmin}_{i,\,P_{m,ts}} \int_{z_0}^{z_{fin}} P_f \; dz \qquad (14a)$$

$$\text{s.t. } P_{\mathrm{trac,ts}} = (F_{\mathrm{d}}(\Gamma, v) + F_{\mathrm{i}}(a) + F_{\mathrm{br}})\, v \qquad (14b)$$

$$\frac{d}{dz}E_b \le -P_b \qquad (14c)$$

where $P_{m,ts}$ defines the third variable and represents the power supplied by motor EM at torque split TS, namely the product $T_{m,ts} \cdot \omega_{ts}$. Moreover, $\boldsymbol{P_f}$, $P_{trac,ts}$, $\boldsymbol{E_b}$, and $P_b$ represents respectively the fuel power, the traction power of wheels WL, the energy stored in battery BY, and the electric power supplied by battery BY.

$P_f$ is associated to a second quantity, which is indicative of an instantaneous power for driving the vehicle 101 and is a function of parameters $\Gamma$, $v$, variable $i$, and variable $P$.

In particular, the power supplied by battery BY includes inner resistive losses in the same battery BY.

Equations 14a, 14b and 14c express respectively the cost function, the first equality constraint and the first inequality constraint. $P_b$ defines the second member of the first inequality constraint and the above first quantity is a function of $P_f$; as evident, $P_b$ and $\boldsymbol{P_f}$ have no explicit dependency on $E_b$, which defines the state variable.

Specifically, $P_f$ is modeled in the following manner:

$$P_f = \begin{cases} 0 & \text{if } i = 0 \\ \kappa_2 P_{e,ts}^2 + \kappa_1 P_{e,ts} + \kappa_0 & \text{if } i > 0 \end{cases} \qquad (11)$$

where $P_{e,ts}$ represents the power supplied by engine ICE at torque split TS and where $\kappa_0$, $\kappa_1$, $\kappa_2$ represent coefficients depending on the output angular rate $\omega_e$ of the engine ICE.

Angular rate $\omega_e$ is proportional to $\omega_{ts}$ and the related proportionality constant is variable as a function of the selected gear of gearbox GB, i.e. of the value assumed by the discrete variable i. More precisely, $\omega_{ts}$ is equal to $\omega_e$ multiplied by the gear ratio that is associated to the value of variable $i$ and by the efficiencies of clutch CL and gearbox GB.

Control unit ECU stores three mappings respectively relating the values of $\kappa_0$, $\kappa_1$, $\kappa_2$ to values of $\omega_e$ or $\omega_{ts}$. Those mappings depend on the engine ICE and their derivation is performed experimentally, in particular by fitting experimental data with second order polynomials.

Vehicle 101 comprises a transducer H1 that is coupled to engine ICE and to control unit ECU; transducer H1 detects another quantity indicative of angular rate $\omega_e$ and generate a signal that is relative to such another quantity and received by control unit ECU for the extraction of actual values of the angular rate $w_e$.

Furthermore, $P_b$ is modeled in the following manner:

$$P_b = \alpha P_{m,ts}^2 + \beta P_{m,ts} \qquad (12)$$

where $\alpha$ and $\beta$ represent coefficients depending on the output angular rate $\omega_m$ of the motor EM. $\omega_m$ is proportional to $\omega_{ts}$ and is specifically obtainable through dividing $\omega_{ts}$ by the gear ratio of gear reducer GR and by the efficiency thereof.

In addition, $\beta$ is further dependent by the sign of $P_{m,ts}$, which may be also negative if the motor EM operates as a generator.

Therefore, $\beta$ is represented as a discontinuous function of $P_{m,ts}$ taking values $\beta_1$ when $P_{m,ts}$ is greater or equal to zero and values $\beta_2$ otherwise.

Control unit ECU stores three mappings respectively relating the values of $\alpha$, $\beta_1$, $\beta_2$ to values of $\omega_m$ or $\omega_{ts}$. Those mappings depend on the motor EM and their derivation is performed experimentally, in particular by fitting experimental data with second order polynomials.

Vehicle 101 comprises a transducer H2 that is coupled to motor EM and to control unit ECU; transducer H2 detects a further quantity indicative of angular rate $\omega_m$ and generate a signal that is relative to such further quantity and received by control unit ECU for the extraction of actual values of the angular rate $\omega_m$.

The fuel power $\boldsymbol{P_f}$ explicitly depends on the third variable $P_{m,ts}$, other than the first variable (variable $i$), since the following straightforward relationship holds:

$$P_{e,ts} = P_{trac,ts} - P_{m,ts} \qquad (18)$$

In addition to the first equality constraint and to the first inequality constraint, the constraints of the optimal control problem further comprise second inequality constraints that set the feasible values of variables $P_{m,ts}$ and i, such that the physical limits of vehicle 101 are not violated.

In particular, the following expresses the other second inequality constraints:

$$\omega_e \in [\omega_{e,min}, \omega_{e,max}] \qquad (14d)$$

$$P_{e,ts} \in \left[0,\ P_{e,ts,max}\left(\omega_e\right)\right] \qquad (14e)$$

$$\omega_m \in \left[0,\ \omega_{m,max}\right] \qquad (14f)$$

$$P_{m,ts} \in \left[P_{m,ts,min}\left(\omega_m\right),\ P_{m,ts,max}\left(\omega_m\right)\right] \quad (14g)$$

$$E_b \in \left[E_{b,min},\ E_{b,max}\right] \qquad (14h)$$

The addition of the subscript *min* and *max* to a symbol indicates, respectively, the minimum and the maximum admissible value for the corresponding parameter, according to the physical limits of vehicle 101.

Moreover, in particular, the constraints comprise a third inequality constraint, which is specifically expressed as follows:

$$E_b\left(z_{fin}\right) \geq E_b(0) \qquad (14i)$$

The third inequality constraint imposes that the level of charge or available energy of battery BY at the end of the mission cannot be inferior to that at the beginning of the mission.

Some of the constraints, in particular the ones expressed by equations 14d to 14i, can be gathered altogether within the cost function as an equivalent indicator function $\Psi(P_{m,ts}, i, E_b)$, which is null when the same gathered constraints are satisfied or infinite otherwise.

The indicator function $\Psi$ is in the variables $P_{m,ts}$, $i$, and $E_b$ since each of the parameters $\omega_e$, $\boldsymbol{P_{e,ts}}$, $\omega_m$, $P_m$, and $E_b$ depends on one or more of the same variables $P_{m,ts}$, $\boldsymbol{i}$, and $E_b$.

Hence, the optimal control problem may be equivalently posed within control unit ECU as follows:

$$\operatorname*{argmin}_{i,\,P} \int_{z_0}^{z_{fin}} P_f + \Psi\left(P, i, E_b\right) dz \qquad (27a)$$

$$s.t.\ \ P_{req} = \left(F_d(\Gamma, v) + F_i(a) + F_{br}\right)v \qquad (27b)$$

$$\frac{d}{dz}E_b \leq -P_b \qquad (27c)$$

where $P_{m,ts}$ and $\boldsymbol{P_{trac,ts}}$ are simply renamed to P and $P_{req}$ for the sake of conciseness.

Applying the known Pontryagin's minimum principle to solve the above formulation of the optimal control problem, the associated Hamiltonian $H(P, i, E_b, \lambda)$ should be minimized with respect to variables $P$, $i$ and with respect to the so-called costate or vector of Lagrange multipliers $\lambda$, under the conditions that:

- the total derivative of the optimal costate $\lambda$, with respect to variable z, is included in the subdifferential of $H$ at the optimal P and i, with respect to the state variable $E_b$; and
- the value of the costate $\lambda$ at the end of mission, i.e. when the variable z is equal to $z_{fin}$, is included in the subdifferential of the cost function at the end of the mission with respect to the value of the state variable $E_b$ at the end of the mission.

In detail, the Hamiltonian H has the following expression:

$$H(P, i, E_b, \lambda) = P_f - \lambda P_b + \Psi(P, i, E_b) \qquad (28)$$

Due to the presence of the discrete variable i and the coefficient $\beta$, the Hamiltonian H is also discontinuous, i.e. non-smooth.

The subdifferential of H at the optimal P and i, with respect to the state variable $E_b$ is here computed, such that it holds:

$$\dot{\lambda} \in -\partial_{E_{\mathrm{b}}} H(P^\star, i^\star, E_{\mathrm{b}}^\star, \lambda) = -\mathcal{N}_{\mathcal{E}_{\mathrm{b}}}(E_{\mathrm{b}}^\star)$$

$$= \begin{cases} [-\infty, \ 0] & \text{if } E_{\mathrm{b}}^\star = E_{\mathrm{b,max}} \\ \{0\} & \text{if } E_{\mathrm{b}}^\star \in (E_{\mathrm{b,min}}, \ E_{\mathrm{b,max}}) \\ [0, \ \infty] & \text{if } E_{\mathrm{b}}^\star = E_{\mathrm{b,min}} \end{cases} \qquad (30)$$

where, the symbol $\dot{\lambda}$ is used to indicate the total derivative of the costate $\lambda$ with respect to variable z. Hereinafter, the addition of the superscript * to a symbol indicates that the corresponding variable is optimal.

The symbol $\mathcal{N}_{\mathcal{E}_{\mathrm{b}}}(E_{\mathrm{b}}^\star)$ indicates the so-called normal cone, of which a more detailed description is given in the article "Time-optimal control policy for a hybrid electric race car", IEEE Transactions on Control System Technology, vol 25, no. 6, pp. 1921-1934, 2017 by M. Salazar et al.

The result in equation 30 implies that the derivative of the optimal costate is null when the state of charge of battery BY is neither at its lower nor its upper bound, whereas it is undetermined when the limits on the state of charge of battery BY are reached.

Evidently, this result is because $P_f$ and $P_b$ are independent of the state variable $E_b$ and the indicator function $\Psi$ is null or infinite when the constraints are respectively met or violated. Thus, the optimal costate $\lambda$ is specifically a piecewise constant function with discontinuities in correspondence of values of z for which the limits on the state of charge of battery BY are reached.

Furthermore, the subdifferential of the cost function at the end of the mission, with respect to the final value of $E_b$, is here computed, such that it holds:

$$\lambda(z_{fin}) \in \partial_{E_{\mathrm{b}}} \Psi_{(E_{\mathrm{b}}(0), \ \infty)}(E_{\mathrm{b}}^\star(z_{fin}))$$

$$= \mathcal{N}_{(E_{\mathrm{b}}(0), \ \infty)}(E_{\mathrm{b}}^\star(z_{fin}))$$

$$= \begin{cases} \{0\} & \text{if } E_{\mathrm{b}}^\star(z_{fin}) > E_{\mathrm{b}}(0) \\ [-\infty, \ 0] & \text{if } E_{\mathrm{b}}^\star(z_{fin}) = E_{\mathrm{b}}(0) \end{cases} \qquad (31)$$

where the symbol $\mathcal{N}_{(E_{\mathrm{b}}(0), \ \infty)}(E_{\mathrm{b}}^\star(z_{fin}))$ indicates another normal cone related to the state variable $E_b$.

The result in equation 31 implies that the value of the costate $\lambda$ at the end of the mission is inferior or equal to zero.

Thus, the costate $\lambda$ is conveniently replaced in equation 28 by a positive equivalence factor s being the negative of the costate $\lambda$ (i.e. equal to -$\lambda$). As it can readily be understood from equation 28, the equivalence factor s has the physical meaning of a penalizing factor, which penalizes the usage of power from battery BY with respect to the usage of fuel power to move vehicle 101.

Independently by the particular choice of $\lambda$ or, equivalently, s, the minimization of the Hamiltonian H with respect to the continuous variable P requires the finding of values of P, for which the subdifferential of H with respect to P is null.

Assuming that all constraints regarding P are satisfied and P is non-zero, the following has to hold:

$$0 = 2\kappa_2 \cdot (\tilde{P}_{\mathrm{uc}}^\star - P_{\mathrm{req}}) - \kappa_1 + s \cdot (2\alpha \tilde{P}_{\mathrm{uc}}^\star + \beta), \quad (33)$$

$$\tilde{P}_{\mathrm{uc}}^\star = \frac{2\kappa_2 P_{\mathrm{req}} + \kappa_1 - s\beta}{2 \cdot (\kappa_2 - s\alpha)}. \qquad (34)$$

where $\tilde{P}_{uc}^*$ stands for an unconstrained P*, in the sense that constraints regarding P, such as the one expressed in equation 14g, are neglected. The variable $\beta$ represents either $\beta_1$ or $\beta_2$ depending on the sign of P.

If P is equal to zero, the derivative of $\beta$ with respect to P is undefined, such that equation 34 no longer holds. However, in this case, the unconstrained optimal solution $P_{uc}^*$ is equal to zero by definition, since P is zero. Considering the piecewise quadratic model of the electric components, expressed in particular by equation 12, the following unconstrained optimal input $P_{uc}^*$ is found for the cases where the clutch is in the engaged status.

$$P_{\mathrm{uc}}^{*}(i > 0) = \begin{cases} \tilde{P}_{\mathrm{uc}}^{\star}(\beta = \beta_1) & \text{if } \tilde{P}_{\mathrm{uc}}^{\star}(\beta = \beta_1) > 0 \\ \tilde{P}_{\mathrm{uc}}^{\star}(\beta = \beta_2) & \text{if } \tilde{P}_{\mathrm{uc}}^{\star}(\beta = \beta_2) < 0 \\ 0 & \text{otherwise} . \end{cases}$$

(35)

Moreover, the closed unconstrained solution in equation 35 is meaningful only in the case the variable i is not zero, i.e. the clutch CL is engaged. Indeed, otherwise, the optimal $P_{uc}^{*}$ would be constrained to be equal to $P_{req}$ directly according to equation 27b. Hence:

$$P_{\mathrm{uc}}^{*}(i = 0) = P_{\mathrm{req}} .$$

(36)

Because the constraints regarding P must be met when the same constraints become active, the constrained solution with respect to variable P of the optimal control problem is straightforward in the light of equation 35 and 36:

$$P^{\star} = \begin{cases} P_{\mathrm{uc}}^{\star} & \text{if } P_{\min} \leq P_{\mathrm{uc}}^{\star} \leq P_{\max} \\ P_{\min} & \text{if } P_{\mathrm{uc}}^{\star} < P_{\min} \\ P_{\max} & \text{if } P_{\mathrm{uc}}^{\star} > P_{\max} . \end{cases}$$

(37)

The optimal i* is determined by control unit ECU, by simply repeating the evaluation of P*, according to equation 37, and the evaluation of the cost function for each possible value of the discrete variable i. In such a manner, the couple of i*, P* leading to the lowest value of the cost function is regarded as the global optimum of the convex optimal control problem, provided that the optimal s* has been already determined.

Since the optimal s* is piecewise constant for the satisfaction of the Pontryagin's minimum principle, control unit ECU determines the optimal s* by solving at least one boundary value problem, where specifically:

- the differential equation to be solved has the same first and second member of the first inequality constraint, namely corresponds to the unrelaxed first inequality constraint or state equation, which is formulated in particular as $(dE_b)/dz = -P_b$; and
- the final condition to be met regards the value of the state variable $E_b$ at the end of the mission, i.e. $E_b(z_{fin}) \geq E_b(0)$ in particular.

In detail, control unit ECU solves the boundary value problem by means of a shooting method, in particular a single shooting.

In particular, the control unit ECU evaluates P and i according to the solution of the optimal control problem and an equivalence factor $s_s$ to determine a resulting $E_b$. A difference function between the resulting $E_b$ at the end of the mission and the corresponding target $E_b$ is determined.

Then, control unit ECU determines the root of the difference function, e.g. by means of the well-known bisection method or Newton's method, such that $s_s$ is determined and thus the optimal s* is determined accordingly.

In particular, at a first instance, control unit ECU solves the boundary value problem for the whole mission, neglecting the constraints related to the state variable in the optimal control problem.

In such a manner, control unit ECU identifies the value $z_V$ of z for which the largest violation of the constraints related to the state variable occurs.

Specifically, control unit ECU identifies the violation of the bounds defined by equation 14h.

There, the boundary value problem is split into two boundary value problems respectively related to a previous portion of the mission, corresponding to the interval from $z_0$ to $z_V$, and to a next portion of the mission, corresponding to the interval from $z_V$ to $z_{fin}$. The target $E_b$ for the previous portion and the initial $E_b$ for the next portion are set to the corresponding violated bound.

Each boundary value problem is then solved for the corresponding portion. If no further violation occurs, the optimal s* for the corresponding portion is stored; else another problem splitting is performed by control unit ECU in an analogous manner to that just described.

Such an iterative approach is here referred to as a multi-point boundary value problem to distinguish the latter from a two-point boundary value problem, which is solved by control unit ECU at the first iteration.

The complete determination of the optimal piecewise constant s* allows the control unit ECU to determine, by definitively solving the optimal control problem, the optimal first and third variable, as well as the resulting optimal state variable, namely *P\*, i\*,* $E_b^*$ , in particular.

Additionally, control unit ECU forces the computed optimal *P\** to take a null value, although such computed *P\** is negative, when the optimal state variable reaches a value indicative that the maximum state of charge of the battery BY has been reached. Indeed, in such a case, battery BY cannot be recharged and motor EM should not work as a generator.

Therefore, during the time in which *P\** is forced to take a null value, control unit ECU activates friction brakes BK to brake vehicle 101, instead of commanding regenerative braking through motor EM. For example, the amount of time in which *P\** is forced coincides with the time until the state of charge of battery BY approaches a predetermined tolerance inferior to the maximum level of charge.

After that time, control unit ECU restore the optimal *P\** to recuperate the requested negative power as fast as possible, unless the optimal values are so negative that the maximum level of charge of battery BY is newly overcome.

In case the optimal values lead to the overcoming of the maximum level of charge, control unit ECU forces the optimal *P\** to take the minimum negative value leading to the reaching of the maximum level of charge of battery BY. Then, again, the optimal *P\** is forced to take a null value until the tolerance is approached.

After the solution of the optimal control problem is obtained, control unit ECU updates the second variable as a function of the optimal values of the third variable. In this way, the optimal values of the second variable are obtained. In particular, it holds:

$$u^* = P^*/P_{req} \qquad (38)$$

Furthermore, the optimal state variable evaluated by control unit ECU corresponds to an optimal trajectory for a third quantity indicative of the state of charge of battery BY. In particular, it holds:

$$\xi^* = (E_b^*)/E_{b,max} \qquad (39)$$

where the symbol $\xi$ is used to indicate a variable representing the adimensional state of charge of battery BY, possibly expressible in percentage. In particular, the optimal $\xi^*$, as a function of the variable *z,* defines the above optimal trajectory.

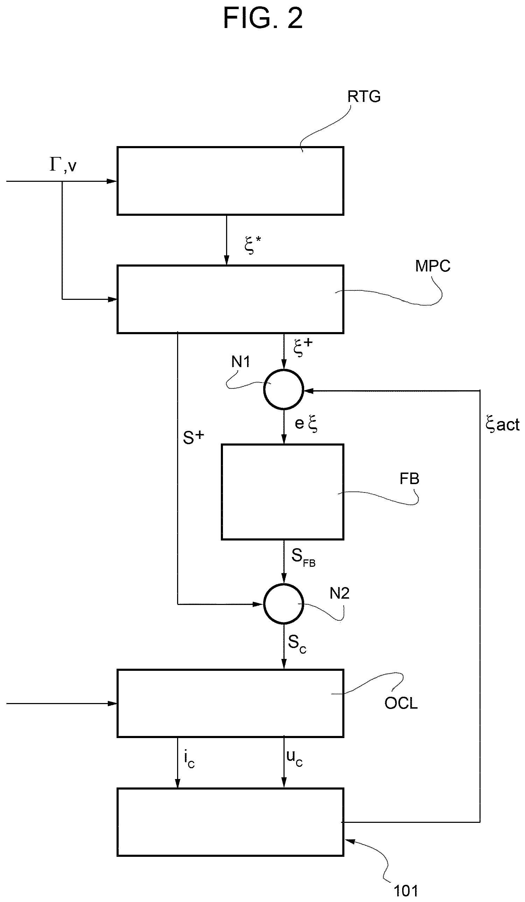

Control unit ECU implements the method outlined in Figure 2, which is essentially based on the solution of the optimal control problem, in particular as already disclosed in detail, in order to control vehicle 101 during the mission.

Control unit ECU comprises a first logic block RTG or a reference trajectory generator, which outputs the optimal trajectory $\xi^*$ starting from parameters $\Gamma$, *v* as inputs. With greater detail, the first logic block RTG solves the optimal control problem for the whole mission, specifically the problem stated in equations 27a, 27b, 27c in the manner disclosed above in detail.

In particular, the first logic block RTG solves the aforementioned multi-point boundary value problem to evaluate the optimal s\*. Moreover, the first logic block RTG evaluate the optimal *P\*, i\*,* $E_b^*$ according to the above disclosure or, more precisely, according to the Pontryagin's minimum principle, the non-smooth Hamiltonian *H* of equation 28, and the mathematical model of vehicle 101 of equations 1, 11, 12.

Eventually, the first logic block RTG computes the optimal trajectory $\xi^*$ according to equation 39 and outputs the optimal trajectory $\xi^*$ itself as a reference trajectory.

The operation of the first logic block RTG is only based on a-priori information about the mission to be pursued by vehicle 101. Indeed, the only required inputs are the a-priori known parameters $\Gamma$, *v* stored by control unit ECU.

In principle, the first block RTG can also compute the optimal torque split ratio *u\** according to equation 38 and, accordingly, output the same optimal torque split ratio *u\** and the optimal discrete variable *i\*.*

According to a not-shown embodiment, the outputted *u\** and *i\** are used by control unit ECU to control motor EM and engine ICE on one hand and clutch CL and gearbox GB on the other hand. In such a case, vehicle 101 would be open-loop controlled.

vehicle 101 further comprises a transducer device T1 coupled to battery BY and to control unit ECU. Transducer device T1 is configured to detect actual values of the third quantity indicative of the state of charge of battery BY and to generate a signal related to the detected values.

Control unit ECU receives the signal generated by transducer device T1 and extracts from the signal, for each value of the variable *z,* a corresponding actual value $\xi_{act}$ associated to the actual state of charge of battery BY.

Control unit ECU additionally comprises a second logic block MPC or a model predictive controller, which receives the actual value $\xi_{act}$, the parameters $\Gamma$, *v,* and the reference trajectory $\xi^*$ as inputs so as to output an updated reference trajectory $\xi^+$ and, conveniently, an updated optimal equivalence factor $s^+$.

Hereinafter, the superscript⁺ has a similar meaning to that of the superscript\* and refers to variables updated by the second logic block MPC. All the above-disclosed equations apply also to updated variables by trivially replacing the superscripts when appropriate. In the following, the recalling of a disclosed equation, in association to updated variables, implies the replacement of the superscripts.

With greater detail, the second logic block MPC repeatedly solves the optimal control problem for a moving interval of the variable *z*. The moving interval starts with the actual value of *z,* corresponding to the actual value $\xi_{act,}$ and has a given size inferior than that of the entire interval related to the whole mission.

Specifically, the second logic block MPC repeatedly solves a problem that differs from that stated in equation 27a, 27b, 27c for the interval of *z* or prediction horizon.

Moreover, the problem solved by the second logic block MPC differs from that stated in equation 27a, 27b, 27c in the initial value set for the state variable $E_b$, which corresponds to the actual value $\xi_{act}$ according to equation 39.

The size of the prediction horizon should be chosen in order to allow effective control of vehicle 101. Indeed, the greater is the size of the prediction horizon, the longer is the computational time for the second logic block MPC to update the outputs.

In the case the variable *z* represents the distance traveled by vehicle along the track, the minimum selectable size of the prediction horizon should be the maximal driving distance that the vehicle 101 can achieve during the updating time.

To evaluate the updated $s^+$, the second logic block MPC may solve the two-point boundary value problem, instead of the multi-point boundary value problem, or the latter as well.

The reason for that stands in that the reference trajectory $\xi^*$ is deemed to satisfy already the constraints related to the state of charge of battery BY.

Therefore, the latter constraints may be disregarded and thus lacking in the optimal control problem solved by the second logic block MPC.

Moreover, the second logic block MPC evaluate also updated variables $P^+$, $i^+$, $E_b^+$ according to the above disclosure or, more specifically, according to the Pontryagin's minimum principle, the non-smooth Hamiltonian H of equation 28, and the mathematical model of vehicle 101 of equations 1, 11, 12.

Similarly to first logic block RTG, the second logic block MPC computes the updated trajectory $\xi^+$ according to equation 39 and outputs the updated trajectory $\xi^+$ itself, possibly together with the updated $s^+$.

the second logic block MPC computes also an updated torque split ratio $u^+$ according to equation 38 and an updated discrete variable $i^+$, which may possibly be outputted and used in replacement of the optimal torque split ratio $u^*$ and the optimal discrete variable $i^*$, according to a not-shown embodiment.

According to the latter not-shown embodiment, the outputted $u^+$ and $i^+$ are used by control unit ECU to control motor EM and engine ICE on one hand and clutch CL and gearbox GB on the other hand. In such a case, vehicle 101 would be closed-loop controlled.

vehicle 101 further comprises another transducer device T2 coupled to control unit ECU and configured to detect a fourth quantity indicative of the total power required at torque split TS and to generate a signal related to the latter fourth quantity. For example, transducer device T2 is coupled to an accelerator (not shown) of vehicle 101; alternatively, transducer device T2 is coupled to the torque split TS.

Control unit ECU receives the signal generated by transducer device T2 and extracts from the signal, for each value of the variable *z*, a corresponding actual value $P_{req,act}$ associated to the actual total power required at torque split TS.

Control unit ECU additionally comprises:

- a comparison node N1, which receive the updated $\xi^+$ from the second logic block MPC and the extracted value $\xi_{act}$ as inputs to compare the latter and output an error feedback $e_\xi$ ;
- a third logic block FB or a classical controller, such as a PI controller or a PID controller, which receives the error feedback $e_\xi$ as input and applies a classical control law to the error feedback $e_\xi$ to output a control signal $s_{FB}$;
- an additional summing node N2, which receive the control signal $s_{FB}$ and the updated $s^+$ in feedforward to output the sum thereof as a further control signal $s_c$; and
- a fourth logic block OCL or an optimal controller, which receives the control signal $s_c$ and the actual value $P_{req,act}$ as inputs to output updated optimal controls $i_c$, $u_c$.

More precisely, the fourth logic block OCL uses the input $s_c$ and $P_{req,act}$ as the equivalence factor $s$ and the required power, respectively, to solve the optimal control problem.

In particular, the fourth logic block OCL solves the optimal control problem on the basis of equations 34 and 37, evaluated for any possible value of the variable *i,* the cost function in equation 27a, and the mathematical model of vehicle 101 of equations 1, 11, 12.

The results of the solution are the optimal controls $i_c$, $u_c$, which are used by control unit ECU as the optimal updated first and second variable to control motor EM and engine ICE on one hand and clutch CL and gearbox GB on the other hand.

The above control unit ECU and the transducer devices T1, T2 make part of a system for controlling vehicle 101.

The logic blocks RTG, MPC, OCL define a multilayered control structure.

In view of the foregoing, the advantages of the method and the system for controlling vehicle 101, according to the invention, are apparent.

In particular, the disclosed method is computationally inexpensive, especially in respect to known methods, and the disclosed system can implement the disclosed method in a real-time fashion.

The control accuracy is at least comparable to that of the known method, although the implementation is significantly faster.

Especially, the disclosed multilayered control structure allows the mixing of a-priori known information with real-time information for an optimal control of the vehicle 101 with an improved effectiveness, with respect to the known methods.

The properties of the chosen parameters and variables for modeling vechicle 101 allows the optimal control problem to be well-posed and solvable in a simple and time efficient manner.

The disclosed method and system allows, moreover, to control not only the power split between motor EM and engine ICE, but also the engagement/disengagement of clutch CL and the gear shift through gearbox GB.

This is pursued by considering not only continuous optimization variables, such as the torque split ratio u or the supplied power $P_{m,ts}$, but also discrete optimization variables, such as the lumped single variable i.

The usage of the generic variable z, possibly representing the distance traveled by vehicle 101 along the track, instead of time, allows to reduce the dynamic influence of the disturbances onto the control of vehicle 101.

Finally, the chosen constraints allow an easy solution of the optimal control problem.

It is clear that modifications can be made to the described method and system, which do not extend beyond the scope of protection defined by the claims.

For example, the numeral adjectives are purely conventional; in particular, the third and the second variable may coincide each other. In other words, the optimal power $P*$ may be directly used to control vehicle 101.

Electric motor EM and internal combustion engine ICE are examples of the first and the second power source of vehicle 101. Therefore, electric motor EM and internal combustion engine ICE may be more generally replaced by the first and the second power source with appropriate straightforward adaptations.

For instance, the internal combustion engine ICE or the electric motor EM may be replaced by a converter configured to draw energy from an overhead line. In such a case, the parameters, quantities and variables related to engine ICE and the related fuel tank or the parameters, quantities and variables related to motor EM and battery BY have to be replaced with corresponding parameters, quantities and variables related to the converter and the overhead line.

Moreover, the internal combustion engine ICE may be replaced by a fuel cell running on gaseous fuel or other kinds of fuel power source.

The third inequality constraint in equation 14i may be different; for instance, such a third inequality constraint may be replaced by a similar equality constraint.

The gear reducer GR may also introduce a plurality of gear ratios; in that case, the presence of further gear ratios may be taken into account by the possible values of the variable i.

Brakes BK may be only emergency brakes and remain always inactive during normal operation of vehicle 101; in such a case the mathematical models of vehicle 101 have to be revised accordingly.

Moreover, the control scheme shown in Figure 2 may be changed; in particular, the feedforwarding of the updated $s^+$ may be omitted or replaced by the direct feedforwarding of the optimal $s*$ outputted by the first logic block RTG. Similarly, the feedback control loop may be closed directly on the reference trajectory $\xi*$ outputted by the first logic block RTG. Furthermore, any other control law can be considered instead of a PI or a PID control law.

The dependency of the derivative of the state variable with respect to the state variable itself can also be considered. As a result, the costate $\lambda$ is no longer constant or piecewise constant, but evolves according to an updated equation 30. The multi-point boundary value problem can still be solved using single shooting, by determining the initial value of $\lambda$ or s for each portion rather than a constant value.

Instead of requiring charge-sustaining operation, equation 14i could be rewritten to aim for a predetermined state of charge of battery BY differing from the initial one. This is especially promising for plug-in hybrid vehicles, where it is desirable to deplete the battery BY over a mission, as it can be recharged using power from an electricity grid at the destination.

Eventually, the optimal control problem may involve only one constraint forming a set of constraints with just one element.

**Claims**

1. A method for controlling a vehicle (101) on a mission, the vehicle (101) comprising a first and a second power source (ICE, EM) for driving the vehicle (101) itself,

the method comprising the steps of:

• solving an optimal control problem based on a mathematical model of the vehicle (101), said optimal control problem involving at least one state variable ($E_b$),

the solving including minimizing a cost function, with respect to a first and a second control variable *(i, P)* and subject to a set of constraints, based on Pontryagin's minimum principle and based on minimization of a Hamiltonian function *(H),* associated to the optimal control problem, with respect to said first control variable *(i),* said second control variable *(P),* and a costate variable *(λ)* being constant or piecewise constant with discontinuities at a maximum and a minimum value for the state variable; and

• controlling the vehicle (101) based on the solution of said optimal control problem,

wherein said state variable ($E_b$) is indicative of an energy amount available to said second power source for the generation of power for driving the vehicle (101), said first control variable *(i)* is a discrete variable indicative of an operation mode of the vehicle (101), and said second control variable (P) is a continuous variable indicative of a power *(P)* supplied by at least one of said first and second power source (ICE, EM);
and wherein the cost function is determined for at least a part of the mission, is convex with respect to said first and second control variable *(i, P),* and is representative of a first quantity indicative of an energy consumed by the first power source (ICE) after said part of the mission is completed;
said set of constraints comprising at least an end-point constraint on the admissible values that said state variable ($E_b$) can take at the end of said part of the mission,
each constraint of the set of constraints defining a respective convex set of admissible values for at least one of said first control variable *(i),* said second control variable *(P),* and said state variable ($E_b$),
**characterized by** further comprising the steps of:

• determining an optimal state variable ($E_b$) in accordance with the solution of the optimal control problem;
• generating a reference trajectory *(ξ\*)* for a third quantity *(ξ)* related to said state variable ($E_b$), in particular a state of charge of a battery (BY) coupled to said second power source for supplying the same second power source, based on the determined optimal state variable ( $E_b^*$ );
• solving a further optimal control problem based on said mathematical model and involving said state variable ($E_b$) and said first and second control variable *(i, P)* as optimization variables;
• acquiring an actual value *(ξ_act)* of said third quantity *(ξ)*;
• updating said optimal state variable ($E_b$) in accordance with the solution of the further optimal control problem; and

• updating said reference trajectory *(ξ\*)* based on the updated optimal state variable ( $E_b^*$ );

wherein said further optimal control problem comprises the minimization of a further cost function with respect to said first and second control variable *(i, P),* subject to said set of constraints and to a further constraint imposing the initial value of said state variable ($E_b$) to correspond to said actual value;
the further cost function is determined for a reduced portion of said part of the mission, is convex with respect to said first and second control variable *(i, P),* and is representative of said first quantity;
wherein the step of solving the further optimal control problem is based on Pontryagin's minimum principle and on the minimization of a further Hamiltonian function *(H)* associated to the further optimal control problem, with respect to said first control variable *(i),* said second control variable *(P),* and said costate variable *(λ).*

2. The method of claim 1, wherein said first control variable (i) takes one among: a first value associated to a disengagement status of a clutch (CL) of the vehicle (101); and a plurality of second values associated to respective selectable gears of a gearbox (GB) of the vehicle (101).

3. The method of claim 1 or 2, wherein the set of constraints further comprises at least one first inequality constraint expressible by an inequation, whose first member is a total derivative of said state variable ($E_b$) with respect to an independent variable *(z)* of the optimal control problem.

4. The method of claim 3, wherein said second member is explicitly independent of said state variable ($E_b$).

5. The method of claim 4, wherein said second power source comprises an electric motor (EM) and said second member is indicative of a power ($P_b$) supplied to said electric motor (EM);
said mathematical model comprising a motor-power model for which said second member is modeled as a polynomial in said second control variable *(P)* with coefficients depending on an output angular rate $\omega_m$ of said electric motor (EM).

6. The method of any one of the foregoing claims, wherein said first quantity is explicitly independent of said state variable.

7. The method of any one of the foregoing claims, wherein the set of constraints further comprises a second inequality constraint, which expresses physical limits of the vehicle (101) .

8. The method of any one of the foregoing claims, wherein at least one of the constraints of the set of constraints is incorporated by said cost function as an indicator function ($\Psi$), which takes an infinite or null value respectively when said incorporated constraint is violated or met.

9. The method of any one of the foregoing claims, wherein the mathematical model comprises a plurality of a priori known first parameters ($\Gamma$, *v*) associated to said mission,

   the mathematical model allowing the determination of a second quantity ($P_f$), which is indicative of an instantaneous power for driving the vehicle (101), as a function of the first parameters ($\Gamma$, *v*), the first control variable (i) and the second control variable (P),
   and wherein said first quantity indicative of said energy consumed by the first power source (ICE) is a function of said second quantity ($P_f$).

10. The method of claim 9, wherein said first power source comprises an engine (ICE) configured to generate power from fuel; said first quantity and said second quantity being respectively indicative of the fuel consumed by the vehicle (101) and of an instantaneous fuel power requested for driving the vehicle (101).

11. The method of claim 10, wherein said mathematical model comprises:

   • a fuel-power model for which said second quantity ($P_f$) is modeled as a polynomial in a second parameter, indicative of a driving power ($P_{e,ts}$) supplied by said engine (ICE), with coefficients ($\kappa_0$, $\kappa_1$, $\kappa_2$) depending on an output angular rate ($\omega_e$) of said engine (ICE);
   • an engine-power model for which said second parameter is modeled as a function of said second control variable *(P)* and of a third parameter, indicative of a total driving power ($P_{req}$) requested for driving the vehicle (101); and
   • a driving-power model for which said third parameter is modeled as a function of a driving resistance for the vehicle (101), the driving resistance depending on said first parameters ($\Gamma$, *v*).

12. The method of claim 11, wherein said set of constraints further comprise an equality constraint expressible through said driving-power model.

13. The method of any one of claims 3 to 12, further comprising the step of determining an optimal equivalence factor *(s\*)* corresponding to an optimal costate variable ($\lambda$*) that minimizes said Hamiltonian function *(H)* with respect to said costate variable ($\lambda$),
   wherein determining the optimal equivalence factor *(s\*)* includes solving at least one boundary value problem, in which a differential equation to be solved has the same first and second member of said first inequality constraint and in which a final condition to be met is associated to said end-point constraint.

14. The method of claim 13, wherein determining the optimal equivalence factor *(s\*)* further includes solving a plurality of boundary value problems associated to respective further successive parts of the mission,
   wherein the set of constraints further comprises a state constraint that bounds said state variable ($E_b$) between a lower and an upper limit; said state constraint being inactive for each of said further successive parts of the mission; said mission being fully defined by the further successive parts.

15. The method of claim 3, further comprising the step of determining an optimal equivalence factor *(s\*)* corresponding to an optimal costate variable ($\lambda$*) that minimizes said further Hamiltonian function (H) with respect to said costate variable ($\lambda$),
   wherein determining the optimal constant equivalence factor *(s\*)* includes solving at least one boundary value problem, in which a differential equation to be solved has the same first and second member of said first inequality constraint and in which a final condition to be met is associated to said end-point constraint.

16. The method of any of the foregoing claims, further comprising the steps of:

- acquiring a first current value ($\xi_{act}$) of said third quantity ($\xi$);
- determining a feedback error ($e_{\xi}$) based on a comparison between a second current value of said reference trajectory ($\xi^*$) and said first current value ($\xi_{act}$);
- applying a control law to said feedback error ($e_{\xi}$), such that a control signal ($s_c$) is obtained;
- acquiring a third current value ($P_{req,act}$) associated to an actual total driving power requested for driving the vehicle (101);
- determining an optimal first control variable ($i_c$) and an optimal second control variable $(P)$ that minimize said Hamiltonian function $(H)$, in which a third parameter indicative of the total driving power ($P_{req}$) requested and said costate variable ($\lambda$) are respectively corresponding to said third current value ($P_{req,act}$) and to said control signal ($s_c$); and
- using the determined optimal first and second control variable ($i_c$, $P$) for controlling the vehicle (101).

17. The method of claims 15 and 16, further comprising the step of feedforwarding said optimal constant equivalence factor (s*) to said control signal ($s_c$).

18. The method of any one of the foregoing claims, wherein said second power source comprises an electric motor (EM) and said vehicle (101) comprises a battery (BY) coupled to said electric motor (EM) for supplying the electric motor (EM) ;
said energy amount being stored within said battery (BY) and defining the state of charge ($\xi$) of said battery (BY).

19. A system for controlling a vehicle (101) on a mission, the vehicle (101) comprising a first and a second power source (ICE, EM) for driving the vehicle (101) itself;
the system comprising a control unit (ECU) programmed to implement the method of any one of claims 1-18.

**Patentansprüche**

1. Verfahren zum Steuern eines Fahrzeugs (101) auf einer Mission, wobei das Fahrzeug (101) eine erste und eine zweite Energiequelle (ICE, EM) zum Antreiben des Fahrzeugs (101) selbst umfasst,

wobei das Verfahren die folgenden Schritte umfasst:

• Lösen eines Problems einer optimalen Steuerung auf der Grundlage eines mathematischen Modells des Fahrzeugs (101), wobei das Problem einer optimalen Steuerung mindestens eine Zustandsvariable ($E_b$) einbezieht,

wobei das Lösen das Minimieren einer Kostenfunktion in Bezug auf eine erste und eine zweite Steuervariable $(i, P)$ und unter Berücksichtigung einer Gruppe von Randbedingungen auf der Grundlage des Pontryagin-Minimalprinzips und auf der Grundlage der Minimierung einer Hamilton-Funktion (H), die dem Problem einer optimalen Steuerung zugeordnet ist, in Bezug auf die erste Steuervariable (i), die zweite Steuervariable (P) und eine Kostenvariable ($\lambda$), die konstant oder stückweise konstant mit Unstetigkeiten bei einem Maximalwert und einem Minimalwert für die Zustandsvariable ist, enthält; und

• Steuern des Fahrzeugs (101) auf der Grundlage der Lösung des Problems einer optimalen Steuerung,

wobei die Zustandsvariable ($E_b$) einen Energiebetrag angibt, der für die zweite Energiequelle für die Erzeugung von Energie zum Antreiben des Fahrzeugs (101) verfügbar ist, die erste Steuervariable (i) eine diskrete Variable ist, die einen Betriebszustand des Fahrzeugs (101) angibt, und die zweite Steuervariable (P) eine kontinuierliche Variable ist, die eine Leistung $(P)$ angibt, die durch die erste und/oder die zweite Energiequelle (ICE, EM) zugeführt wird;
und wobei die Kostenfunktion zumindest für einen Abschnitt der Mission bestimmt wird, in Bezug auf die erste und die zweite Steuervariable $(i, P)$ konvex ist und eine erste Größe darstellt, die eine Energie angibt, die durch die erste Energiequelle (ICE) verbraucht worden ist, nachdem der Abschnitt der Mission abgeschlossen worden ist;
wobei die Gruppe von Randbedingungen mindestens eine Endpunktrandbedingung auf den zulässigen Werten, die die Zustandsvariable ($E_b$) am Ende des Abschnitts der Mission annehmen kann, umfasst,

wobei jede Randbedingung der Gruppe von Randbedingungen eine jeweilige konvexe Gruppe von zulässigen Werten für die erste Steuervariable (i) und/oder die zweite Steuervariable (P) und/oder die Zustandsvariable ($E_b$) definiert,

**dadurch gekennzeichnet, dass** es ferner die folgenden Schritte umfasst:

- Bestimmen einer optimalen Zustandsvariablen ($E_b^*$) in Übereinstimmung mit der Lösung des Problems einer optimalen Steuerung;
- Erzeugen einer Referenzübertragungslinie ($\xi^*$) für eine dritte Größe ($\xi$) bezüglich der Zustandsvariable ($E_b$), insbesondere eines Ladungszustands einer Batterie (BY), die zum Versorgen derselben zweiten Energiequelle mit der zweiten Energiequelle gekoppelt ist, auf der Grundlage der bestimmten optimalen Zustandsvariable ($E_b^*$);
- Lösen eines weiteren Problems einer optimalen Steuerung auf der Grundlage des mathematischen Modells und unter Einbeziehung der Zustandsvariable ($E_b$) und der ersten und der zweiten Steuervariable (i, P) als Optimierungsvariablen;
- Erfassen eines tatsächlichen Wertes ($\xi_{act}$) der dritten Größe ($\xi$);
- Aktualisieren der optimalen Zustandsvariable ($E_b^*$) in Übereinstimmung mit der Lösung des weiteren Problems einer optimalen Steuerung; und
- Aktualisieren der Referenzübertragungslinie ($\xi^*$) auf der Grundlage der aktualisierten optimalen Zustandsvariable ($E_b^*$);

wobei das weitere Problem einer optimalen Steuerung die Minimierung einer weiteren Kostenfunktion in Bezug auf die erste und die zweite Steuervariable (i, P) unter Berücksichtigung der Gruppe von Randbedingungen und einer weiteren Randbedingung, die auferlegt, dass der Anfangswert der Zustandsvariable ($E_b$) dem tatsächlichen Wert entspricht, umfasst;

wobei die weitere Kostenfunktion für einen verkleinerten Abschnitt des Abschnitts der Mission bestimmt wird, in Bezug auf die erste und die zweite Steuervariable (i, P) konvex ist und die erste Größe darstellt;

wobei der Schritt des Lösens des weiteren Problems einer optimalen Steuerung auf dem Pontryagin-Minimalprinzip und auf der Minimierung einer weiteren Hamilton-Funktion (H), die dem weiteren Problem einer optimalen Steuerung zugeordnet ist, in Bezug auf die erste Steuervariable (i), die zweite Steuervariable (P) und die Kostenvariable ($\lambda$) beruht.

2. Verfahren nach Anspruch 1, wobei die erste Steuervariable (i) einen der folgenden Werte annimmt: einen ersten Wert, der einem Trennungszustand einer Kupplung (CL) des Fahrzeugs (101) zugeordnet ist; und mehrere zweite Werte, die jeweiligen auswählbaren Gängen eines Getriebes (GB) des Fahrzeugs (101) zugeordnet sind.

3. Verfahren nach Anspruch 1 oder 2, wobei die Gruppe von Randbedingungen ferner mindestens eine Ungleichheitsrandbedingung umfasst, die durch eine Ungleichung ausdrückbar ist, deren erstes Element eine totale Ableitung der Zustandsvariable ($E_b$) in Bezug auf eine unabhängige Variable (z) des Problems einer optimalen Steuerung ist.

4. Verfahren nach Anspruch 3, wobei das zweite Element von der Zustandsvariable ($E_b$) explizit unabhängig ist.

5. Verfahren nach Anspruch 4, wobei die zweite Energiequelle einen Elektromotor (EM) umfasst und das zweite Element eine Leistung ($P_b$) angibt, die dem Elektromotor (EM) zugeführt wird;

wobei das mathematische Modell ein Motorleistungsmodell umfasst, für das das zweite Element als ein Polynom in der zweiten Steuervariable (P) modelliert ist, wobei die Koeffizienten von einer Ausgangswinkelgeschwindigkeit $\omega_m$ des Elektromotors (EM) abhängen.

6. Verfahren nach einem der vorhergehenden Ansprüche, wobei die erste Größe von der Zustandsvariable explizit unabhängig ist.

7. Verfahren nach einem der vorhergehenden Ansprüche, wobei die Gruppe von Randbedingungen ferner eine zweite Ungleichheitsrandbedingung umfasst, die physikalische Grenzwerte des Fahrzeugs (101) ausdrückt.

8. Verfahren nach einem der vorhergehenden Ansprüche, wobei mindestens eine der Randbedingungen der Gruppe von Randbedingungen durch die Kostenfunktion als eine Indikatorfunktion ($\psi$) eingebunden ist, die einen Wert unendlich oder null annimmt, wenn die eingebundene Randbedingung verletzt bzw. erfüllt wird.

9. Verfahren nach einem der vorhergehenden Ansprüche, wobei das mathematische Modell mehrere a priori bekannte erste Parameter ($\Gamma$, $v$), die der Mission zugeordnet sind, umfasst,

   wobei das mathematische Modell die Bestimmung einer zweiten Größe ($P_f$), die eine Augenblicksleistung zum Antreiben des Fahrzeugs (101) angibt, als eine Funktion der ersten Parameter ($\Gamma$, $v$), der ersten Steuervariable (i) und der zweiten Steuervariable (P) ermöglicht,
   und wobei die erste Größe, die die Energie angibt, die durch die erste Energiequelle (ICE) verbraucht wird, eine Funktion der zweiten Größe ($P_f$) ist.

10. Verfahren nach Anspruch 9, wobei die erste Energiequelle eine Kraftmaschine (ICE) umfasst, die konfiguriert ist, aus einem Kraftstoff Energie zu erzeugen; wobei die erste Größe und die zweite Größe den Kraftstoff, der durch das Fahrzeug (101) verbraucht wird, bzw. eine Augenblickskraftstoffleistung, die zum Antreiben des Fahrzeugs (101) erforderlich ist, angeben.

11. Verfahren nach Anspruch 10, wobei das mathematische Modell Folgendes umfasst:

    • ein Kraftstoff/Leistungs-Modell, für das die zweite Größe ($P_f$) als ein Polynom in einem zweiten Parameter modelliert ist, der eine Antriebsleistung ($P_{e,ts}$), die durch die Kraftmaschine (ICE) zugeführt wird, angibt, wobei die Koeffizienten ($\kappa_0$, $\kappa_1$, $\kappa_2$) von einer Ausgangswinkelgeschwindigkeit ($\omega_e$) der Kraftmaschine (ICE) abhängen;
    • ein Kraftmaschine/Leistungs-Modell, für das der zweite Parameter als eine Funktion der zweiten Steuervariable (P) und eines dritten Parameters, der eine Gesamtantriebsleistung ($P_{req}$), die zum Antreiben des Fahrzeugs (101) erforderlich ist, angibt, modelliert ist; und
    • ein Antriebs/Leistungs-Modell, für das der dritte Parameter als eine Funktion eines Antriebswiderstands für das Fahrzeug (101) modelliert ist, wobei der Antriebswiderstand von den ersten Parametern ($\Gamma$, $v$) abhängt.

12. Verfahren nach Anspruch 11, wobei die Gruppe von Randbedingungen ferner eine Gleichheitsrandbedingung umfasst, die durch das Antriebs/Leistungs-Modell ausdrückbar ist.

13. Verfahren nach einem der Ansprüche 3 bis 12, das ferner den Schritt des Bestimmens eines optimalen Äquivalenzfaktors ($s^*$), der einer optimalen Kostenvariable ($\lambda^*$) entspricht, die die Hamilton-Funktion (H) in Bezug auf die Kostenvariable ($\lambda$) minimiert, umfasst,
    wobei das Bestimmen des optimalen Äquivalenzfaktors ($s^*$) das Lösen mindestens eines Grenzwertproblems, wobei eine zu lösende Differentialgleichung dasselbe erste und zweite Element wie die erste Ungleichheitsrandbedingung aufweist und wobei eine zu erfüllende endgültige Bedingung der Endpunktrandbedingung zugeordnet wird, enthält.

14. Verfahren nach Anspruch 13, wobei das Bestimmen des optimalen Äquivalenzfaktors ($s^*$) ferner das Lösen mehrerer Grenzwertprobleme, die jeweiligen weiteren Abschnitten der Mission zugeordnet sind, enthält,
    wobei die Gruppe von Randbedingungen ferner eine Zustandsrandbedingung umfasst, die die Zustandsvariable ($E_b$) zwischen einem unteren und einem oberen Grenzwert begrenzt; wobei die Zustandsrandbedingung für jeden der weiteren nachfolgenden Abschnitte der Mission gültig ist; wobei die Mission durch die weiteren nachfolgenden Abschnitte vollständig definiert wird.

15. Verfahren nach Anspruch 3, das ferner den Schritt des Bestimmens eines optimalen Äquivalenzfaktors ($s^*$), der einer optimalen Kostenvariable ($\lambda^*$) entspricht, die die weitere Hamilton-Funktion (H) in Bezug auf die Kostenvariable ($\lambda$) minimiert, umfasst,
    wobei das Bestimmen des optimalen konstanten Äquivalenzfaktors ($s^*$) das Lösen mindestens eines Grenzwertproblems, wobei eine zu lösende Differentialgleichung dasselbe erste und zweite Element wie die erste Ungleichheitsrandbedingung aufweist und wobei eine zu erfüllende endgültige Bedingung der Endpunktrandbedingung zugeordnet wird, enthält.

16. Verfahren nach einem der vorhergehenden Ansprüche, das ferner die folgenden Schritte umfasst:

    • Erfassen eines ersten aktuellen Wertes ($\xi_{act}$) der dritten Größe ($\xi$);
    • Bestimmen eines Rückkopplungsfehlers ($e_\xi$) auf der Grundlage eines Vergleichs zwischen einem zweiten aktuellen Wert der Referenzübertragungslinie ($\xi^*$) und dem ersten aktuellen Wert ($\xi_{act}$);
    • Anwenden eines Steuerungsgesetzes auf den Rückkopplungsfehler ($e_\xi$), derart, dass ein Steuersignal ($s_c$) erhalten wird;
    • Erfassen eines dritten aktuellen Wertes ($P_{req,act}$), der einer tatsächlichen Gesamtantriebsleistung zugeordnet ist, die zum Antreiben des Fahrzeugs (101) erforderlich ist;

• Bestimmen einer optimalen ersten Steuervariable ($i_c$) und einer optimalen zweiten Steuervariable (P), die die Hamilton-Funktion (H) minimieren, wobei ein dritter Parameter, der die erforderliche Gesamtantriebsleistung ($P_{req}$) angibt, und die Kostenvariable ($\lambda$) dem dritten aktuellen Wert ($P_{req,act}$) bzw. dem Steuersignal ($s_c$) entsprechen; und

• Verwenden der bestimmten optimalen ersten und zweiten Steuervariable ($i_c$, P) zum Steuern des Fahrzeugs (101).

**17.** Verfahren nach den Ansprüchen 15 und 16, das ferner den Schritt des Vorwärtskoppelns des optimalen konstanten Äquivalenzfaktors ($s^*$) zum Steuersignal ($s_c$) umfasst.

**18.** Verfahren nach einem der vorhergehenden Ansprüche, wobei die zweite Energiequelle einen Elektromotor (EM) umfasst und das Fahrzeug (101) eine Batterie (BY) umfasst, die zum Versorgen des Elektromotors (EM) mit dem Elektromotor (EM) gekoppelt ist;

wobei der Energiebetrag in der Batterie (BY) gespeichert ist und den Ladungszustand ($\xi$) der Batterie (BY) definiert.

**19.** System zum Steuern eines Fahrzeugs (101) auf einer Mission, wobei das Fahrzeug (101) eine erste und eine zweite Energiequelle (ICE, EM) zum Antreiben des Fahrzeugs (101) selbst umfasst;

wobei das System eine Steuereinheit (ECU) umfasst, die programmiert ist, das Verfahren nach einem der Ansprüche 1-18 zu implementieren.

## Revendications

**1. Procédé** de commande d'un véhicule (101) en mission, le véhicule (101) comprenant une première et une deuxième sources d'alimentation (ICE, EM) pour entraîner le véhicule (101) lui-même,

le procédé comprenant les étapes comprenant le fait de :

• résoudre un problème de commande optimale sur la base d'un modèle mathématique du véhicule (101), ledit problème de commande optimale impliquant au moins une variable d'état ($E_b$),

la résolution comprenant la minimisation d'une fonction de coût, par rapport à une première et une deuxième variables de commande ($i$, P) et sous réserve d'un ensemble de contraintes, sur la base du principe du minimum de Pontryagin et sur la base de la minimisation d'une fonction hamiltonienne (H), associée au problème de commande optimale, par rapport à ladite première variable de commande (i), à ladite deuxième variable de commande (P) et à une variable d'état conjoint ($\lambda$) qui est constante ou constante par morceaux avec des discontinuités à une valeur maximale et à une valeur minimale de la variable d'état ; et

• commander le véhicule (101) sur la base de la solution dudit problème de commande optimale,

dans lequel ladite variable d'état est indicative d'une quantité d'énergie disponible pour ladite deuxième source d'alimentation dans le cadre de la génération de puissance pour entraîner le véhicule (101), ladite première variable de commande (i) est une variable discrète indicative d'un mode de fonctionnement du véhicule (101), et ladite deuxième variable de commande (P) est une variable continue indicative d'une puissance (P) fournie par au moins l'une de la première et deuxième sources d'alimentation (ICE, EM) ; et

dans lequel la fonction de coût est déterminée pour au moins une partie de la mission, est convexe par rapport à ladite première et deuxième variables de commande ($i$, P), et est représentative d'une première quantité indicative d'une énergie consommée par la première source d'alimentation (ICE) après que ladite partie de la mission est accomplie ;

ledit ensemble de contraintes comprenant au moins une contrainte de point d'extrémité sur les valeurs admissibles que ladite variable d'état peut prendre à la fin de ladite partie de la mission,

chaque contrainte de l'ensemble de contraintes définissant un ensemble convexe respectif de valeurs admissibles pour au moins l'une de ladite première variable de commande (i), ladite deuxième variable de commande (P) et ladite variable d'état ($E_b$),

**caractérisé en ce que** le procédé comprend en outre les étapes comprenant le fait de :

• déterminer une variable d'état optimal ($E_b^*$) conformément à la solution du problème de commande optimale ;

• générer une trajectoire de référence ($\xi^*$) pour une troisième quantité ($\xi$) liée à ladite variable d'état ($E_b$), en particulier un état de charge d'une batterie (BY) couplée à ladite deuxième source d'alimentation pour alimenter la même deuxième source d'alimentation, sur la base de la variable d'état optimal déterminée ( $E_b^*$ ) ;

• résoudre un autre problème de commande optimale sur la base dudit modèle mathématique et impliquer ladite variable d'état ($E_b$) et ladite première et deuxième variables de commande (*i, P*) en tant que variables d'optimisation ;

• acquérir une valeur réelle ($\xi_{act}$) de ladite troisième quantité ($\xi$) ;

• mettre à jour ladite variable d'état optimal ( $E_b^*$ ) conformément à la solution de l'autre problème de commande optimale ; et

• mettre à jour ladite trajectoire de référence ($\xi^*$) sur la base de la variable d'état optimal mise à jour ( $E_b^*$ ) ;

dans lequel ledit autre problème de commande optimale comprend la minimisation d'une autre fonction de coût par rapport à ladite première et deuxième variables de commande (*i, P*), sous réserve dudit ensemble de contraintes et d'une autre contrainte imposant que la valeur initiale de ladite variable d'état ($E_b$) corresponde à ladite valeur réelle ;

l'autre fonction de coût est déterminée pour une partie réduite de ladite partie de la mission, est convexe par rapport à ladite première et deuxième variables de commande (*i, P*), et est représentative de ladite première quantité ;

dans lequel l'étape de résolution de l'autre problème de commande optimale est basée sur le principe du minimum de Pontryagin et sur la minimisation d'une autre fonction hamiltonienne (*H*) associée à l'autre problème de commande optimale, par rapport à ladite première variable de commande (i), ladite deuxième variable de commande (*P*) et ladite variable d'état conjoint ($\lambda$).

2. Procédé selon la revendication 1, dans lequel ladite première variable de commande (i) prend l'une des valeurs parmi : une première valeur associée à un état de désengagement d'un embrayage (CL) du véhicule (101) ; et une pluralité de deuxièmes valeurs associées à des rapports sélectionnables respectifs d'une boîte de vitesses (GB) du véhicule (101).

3. Procédé selon la revendication 1 ou 2, dans lequel l'ensemble de contraintes comprend en outre au moins une première contrainte d'inégalité exprimable par une inéquation, dont le premier membre est une dérivée totale de ladite variable d'état ($E_b$) par rapport à une variable indépendante (*z*) du problème de commande optimale.

4. Procédé selon la revendication 3, dans lequel ledit deuxième membre est explicitement indépendant de ladite variable d'état ($E_b$).

5. Procédé selon la revendication 4, dans lequel ladite deuxième source d'alimentation comprend un moteur électrique (EM) et ledit deuxième membre est indicatif d'une puissance ($P_b$) fournie audit moteur électrique (EM) ;
ledit modèle mathématique comprenant un modèle de puissance de moteur électrique pour lequel ledit deuxième membre est modélisé en tant qu'un polynôme dans ladite deuxième variable de commande (*P*) avec des coefficients dépendant d'une vitesse angulaire de sortie $\omega_m$ dudit moteur électrique (EM).

6. Procédé selon l'une quelconque des revendications précédentes, dans lequel ladite première quantité est explicitement indépendante de ladite variable d'état.

7. Procédé selon l'une quelconque des revendications précédentes, dans lequel l'ensemble de contraintes comprend en outre une deuxième contrainte d'inégalité, qui exprime les limites physiques du véhicule (101).

8. Procédé selon l'une quelconque des revendications précédentes, dans lequel au moins l'une des contraintes de l'ensemble de contraintes est incorporée par ladite fonction de coût sous la forme d'une fonction indicatrice ($\psi$), qui prend respectivement une valeur infinie ou nulle lorsque ladite contrainte incorporée est violée ou satisfaite.

9. Procédé selon l'une quelconque des revendications précédentes, dans lequel le modèle mathématique comprend une pluralité de premiers paramètres connus *a priori* ($\Gamma$, *v*) associés à ladite mission,

le modèle mathématique permettant la détermination d'une deuxième quantité ($P_f$), qui est indicative d'une puissance instantanée pour entraîner le véhicule (101), en fonction des premiers paramètres ($\Gamma$, $v$), de la première variable de commande ($i$) et de la deuxième variable de commande ($P$), et

dans lequel ladite première quantité indicative de ladite énergie consommée par la première source d'alimentation (ICE) est une fonction de ladite deuxième quantité ($P_f$).

10. Procédé selon la revendication 9, dans lequel ladite première source d'alimentation comprend un moteur thermique (ICE) configuré pour générer de la puissance à partir de carburant; ladite première quantité et ladite deuxième quantité étant respectivement indicatives du carburant consommé par le véhicule (101) et d'une puissance de carburant instantanée requise pour entraîner le véhicule (101).

11. Procédé selon la revendication 10, dans lequel ledit modèle mathématique comprend :

    • un modèle de puissance de carburant pour lequel ladite deuxième quantité ($P_f$) est modélisée sous la forme d'un polynôme dans un deuxième paramètre, indicatif d'une puissance motrice ($P_{e,ts}$) fournie par ledit moteur thermique (ICE), avec des coefficients ($K_0$, $K_1$, $K_2$) dépendant d'une vitesse angulaire de sortie ($\omega_e$) dudit moteur thermique (ICE) ;

    • un modèle de puissance de moteur thermique pour lequel ledit deuxième paramètre est modélisé en fonction de ladite deuxième variable de commande ($P$) et d'un troisième paramètre, indicatif d'une puissance motrice totale ($P_{req}$) requise pour entraîner le véhicule (101) ; et

    • un modèle de puissance motrice pour lequel ledit troisième paramètre est modélisé en fonction d'une résistance à l'entraînement du véhicule (101), la résistance à l'entraînement dépendant desdits premiers paramètres ($\Gamma$, $v$).

12. Procédé selon la revendication 11, dans lequel ledit ensemble de contraintes comprend en outre une contrainte d'égalité exprimable par le biais dudit modèle de puissance motrice.

13. Procédé selon l'une quelconque des revendications 3 à 12, comprenant en outre l'étape de détermination d'un facteur d'équivalence optimal ($s^*$) correspondant à une variable d'état conjoint optimale ($\lambda^*$) qui minimise ladite fonction hamiltonienne ($H$) par rapport à ladite variable d'état conjoint ($\lambda$),

dans lequel la détermination du facteur d'équivalence optimal ($s^*$) comprend la résolution d'au moins un problème de valeur limite, dans lequel une équation différentielle à résoudre a les mêmes premier et deuxième membres de ladite première contrainte d'inégalité et dans lequel une condition finale à satisfaire est associée à ladite contrainte de point d'extrémité.

14. Procédé selon la revendication 13, dans lequel la détermination du facteur d'équivalence optimal ($s^*$) comprend en outre la résolution d'une pluralité de problèmes de valeur limite associés à d'autres parties successives respectives de la mission,

dans lequel l'ensemble de contraintes comprend en outre une contrainte d'état qui limite ladite variable d'état ($E_b$) entre une limite inférieure et une limite supérieure ; ladite contrainte d'état étant inactive pour chacune desdites autres parties successives de la mission ; ladite mission étant entièrement définie par les autres parties successives.

15. Procédé selon la revendication 3, comprenant en outre l'étape de détermination d'un facteur d'équivalence optimal ($s^*$) correspondant à une variable d'état conjoint optimale ($\lambda^*$) qui minimise ladite autre fonction hamiltonienne ($H$) par rapport à ladite variable d'état conjoint ($\lambda$),

dans lequel la détermination du facteur d'équivalence constant optimal ($s^*$) comprend la résolution d'au moins un problème de valeur limite, dans lequel une équation différentielle à résoudre a les mêmes premier et deuxième membres de ladite première contrainte d'inégalité et dans lequel une condition finale à satisfaire est associée à ladite contrainte de point d'extrémité.

16. Procédé selon l'une quelconque des revendications précédentes, comprenant en outre les étapes comprenant le fait de :

    • acquérir une première valeur actuelle ($\xi_{act}$) de ladite troisième quantité ($\xi$) ;

    • déterminer une erreur de rétroaction ($e_\xi$) sur la base d'une comparaison entre une deuxième valeur actuelle de ladite trajectoire de référence ($\xi^*$) et ladite première valeur actuelle ($\xi_{act}$) ;

    • appliquer une loi de commande à ladite erreur de rétroaction ($e_\xi$), de sorte qu'un signal de commande ($s_c$) est obtenu ;

    • acquérir une troisième valeur actuelle ($P_{req,act}$) associée à une puissance motrice totale réelle requise pour entraîner le véhicule (101) ;

• déterminer une première variable de commande optimale ($i_c$) et une deuxième variable de commande optimale ($P$) qui minimisent ladite fonction hamiltonienne ($H$), dans laquelle un troisième paramètre, indicatif de la puissance motrice totale ($P_{req}$) requise, et ladite variable d'état conjoint ($\lambda$), correspondent respectivement à ladite troisième valeur actuelle ($P_{req,act}$) et audit signal de commande ($s_c$) ; et

• utiliser la première et deuxième variables de commande optimales déterminées ($i_c$, $P$) pour commander le véhicule (101).

**17.** Procédé selon les revendications 15 et 16, comprenant en outre l'étape de transmission anticipée dudit facteur d'équivalence constant optimal ($s^*$) audit signal de commande ($s_c$).

**18.** Procédé selon l'une quelconque des revendications précédentes, dans lequel ladite deuxième source d'alimentation comprend un moteur électrique (EM) et ledit véhicule (101) comprend une batterie (BY) couplée audit moteur électrique (EM) pour alimenter le moteur électrique (EM) ;

ladite quantité d'énergie étant stockée dans ladite batterie (BY) et définissant l'état de charge ($\xi$) de ladite batterie (BY).

**19.** Système de commande d'un véhicule (101) en mission, le véhicule (101) comprenant une première et une deuxième sources d'alimentation (ICE, EM) pour entraîner le véhicule (101) lui-même ;

le système comprenant une unité de commande (ECU) programmée pour mettre en œuvre le procédé selon l'une quelconque des revendications 1 à 18.

# FIG. 1

101

EP 3 756 963 B1

# FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 102019000010431
- WO 2018158524 A1
- FR 3068322 A1
- FR 3055996 A1

**Non-patent literature cited in the description**

- **M. SALAZAR**. Time-optimal control policy for a hybrid electric race car. *IEEE Transactions on Control System Technology*, 2017, vol. 25 (6), 1921-1934